# EUROPEAN PATENT SPECIFICATION

(11) **EP 2 553 180 B1**
(45) Date of publication and mention of the grant of the patent: **12.08.2020**
(21) Application number: 11720871.0
(22) Date of filing: 04.04.2011
(51) Int. Cl.: F23G 5/08, F23G 7/00, E04B 2/70, F23J 1/08, C03B 5/00, C03B 5/06

(54) **TILTING FURNACE**
SCHAUKELOFEN
FOUR BASCULANT

(30) Priority: 02.04.2010 BE 201000210
(43) Date of publication of application: 06.02.2013
(73) Proprietor: Belgoprocess N.V., 2480 Dessel (BE)
(72) Inventor: DECKERS, Jan, B-9170 Sint-Gillis-Waas (BE); HANSEN, Jurgen, B-3900 Overpelt (BE)
(74) Representative: Gevers Patents
(86) International application number: PCT/IB2011/051441
(87) International publication number: WO 2011/121582

(56) References cited:
- EP-A2- 0 400 925
- EP-A2- 0 759 525
- WO-A1-2005/052447
- WO-A2-97/49641
- JP-A- 2008 209 040
- US-A- 1 794 455
- US-A- 4 728 081

## Description

The invention relates to a furnace for melting inorganic and gasifying organic toxic and radioactive material. The furnace comprises: a frame; a bowl-like housing for temporary enclosure of said material, which can be tilted around a substantially horizontal axis which intersects the housing at two points; a supply opening through said housing that can be connected with a material supply through said housing for introduction of said material into said housing, said supply opening extending substantially coaxial with said horizontal axis through the housing at the site of the first of said two points; a discharge opening through said housing for removal of molten material from said housing, the discharge opening being arranged in a wall of the housing so that at least part of said molten material can be removed from the housing via the discharge opening by tilting the furnace around said axis; a gas outlet through said housing that can be connected with a gas discharge for removal of gasified material from said housing, said gas outlet extending substantially coaxial with said horizontal axis through the housing at the site of the second of said two points; a second sealing bearing disposed within the supply opening configured to receive a part of said material supply to connect the supply opening hermetically to the material supply; and a third sealing bearing disposed within the gas outlet configured to receive a part of said gas discharge to connect the gas outlet hermetically to the gas discharge.

Such a furnace is known from US 1 794 455 A which discloses a tilting furnace having two supply openings coaxial with the horizontal tilting axis of the furnace. This furnace is an electric furnace intended for melting inorganic material such as ore and reducing agent to produce iron, steel or iron alloys. The discharge opening is arranged to empty the furnace completely upon tilting it so that no product remains on the bottom of the furnace. Gasses may be removed through one or more of the supply openings or through a separate gas outlet.

WO 2005/052447 describes a high temperature furnace for combustion and melting of waste, in particular toxic and radioactive waste, by means of a plasma torch. The housing of this furnace is formed as a centrifuge. This centrifuge comprises a floor and walls and a discharge opening provided in the floor. The centrifuge rotates around a vertical axis and the discharge opening extends coaxial with this axis. In operation material in the rotating housing is moved by centrifugal forces towards the walls away from the discharge opening. By reducing the rotation speed, the material is discharged. This discharge is stopped by increasing the rotation speed, whereby the material moves away from the discharge opening under centrifugal force. This furnace can be sealed hermetically and works in cycles wherein between successive cycles, the housing is opened and new material for melting and gasifying is introduced. Because the housing is bowl- shaped, the material to be molten and gasified in the furnace collects at the lowest point of the bowl, whereby the heating means can be directed towards a centre zone of the bowl where said material has collected in order there to melt and gasify the material very locally with very high temperatures.

One disadvantage of this known furnace is that the discharge cannot be controlled precisely. Furthermore inside the housing the furnace comprises a substantial number of moving parts which from time to time require maintenance and which are contaminated by the material in the furnace. A further disadvantage is that the discharge opening is at the bottom of the housing, whereby the discharge opening is difficult to access in particular when this is blocked. Unblocking such a discharge opening constitutes a risk of substantial contamination for the person performing the unblocking.

JP 2008 209040 A discloses a tiltable furnace to incinerate waste, i.e. city rubbish, using a plasma torch. The molten material is poured through a discharge opening by tilting the housing. The furnace has two hinges at the bottom of the furnace with one of said hinges being fixed and the other one being connected to a push-up device thus tilting the furnace around an axis corresponding to the fixed hinge.

WO 97/49641 A2 discloses a waste treatment system for applying very high temperatures to destroy and treat radioactive waste and other hazardous materials. The hazardous materials are usually contained in barrels of approximately 210 litres and are not pre-sorted or shredded before being fed into the system. The system comprises several components of which the plasma chamber is considered to be the primary structural component. Accordingly, the plasma chamber is rigidly supported to a support structure or surface. Another important component is the hearth, which acts as the bottom of the plasma chamber during operation, but may be lowered. The system treats waste in several phases. Initially, the drums are slowly fed into the plasma chamber so that the hazardous material is drip-melted into the hearth. Next, the hazardous material is melted and/or vaporized in the plasma chamber using a plasma torch. The resulting gas is discharged from the plasma chamber to the secondary chamber, while the molten material collects in the centre of the hearth. In order to empty the plasma chamber, the hearth is lowered with respect to the plasma chamber. After lowering the hearth, it is tilted approximately 15.0 degrees in two diametrically opposing directions for collecting the slag phase and then collecting the metal phase.

US 4 728 081 A discloses a furnace for processing organic and inorganic materials and metals. The furnace has a supply opening and a discharge opening and is rotatable around an axis. The furnace is emptied by rotation around the axis until the discharge opening becomes lower than the level of the molten material. The furnace body is mounted on a pair of rollers that rest on a bed. A motor is provided to drive the rotation of the body around axis O-O. The furnace body provided with a supply opening and a gas outlet.

EP 0 759 525 A2 discloses a waste-melting furnace for the disposal of solid waste, municipal waste, or radioactive waste using a torch plasma gun to melt the waste. The furnace operates in a non-continuous fashion and the melt is emptied into a mould. The temperatures of the torch plasma gun can reach tens of thousands °C. The furnace has two hinges at the bottom of the furnace with one of said hinges being connected to a cylinder and the other hinge remaining fixed. The cylinder pushes one end of the furnace upwards thus tilting the furnace around an axis corresponding to the fixed hinge.

EP 0 400 925 A2 discloses a furnace for processing scrap metals. The furnace has a housing that may be rotated around an axis. The housing has a supply opening; a gas outlet; a discharge opening and a plasma torch. A framework is provided to support the cylinder and enable rotation of the cylinder by rollers and also tilting about pivot.

The object of the invention is to provide a furnace with fewer moving parts in the housing, which can work continuously and from which discharge can be controlled better than in a furnace according to the prior art.

For this the furnace according to the invention further comprises a plasma torch provided to melt and gasify the material introduced; and a first bearing disposed between the frame and the housing around each of said two points to mount the housing on the frame.

As described above, the furnace according to the present invention has the feature that said housing is mounted tilting around a substantially horizontal axis, said supply opening and said gas opening extend substantially coaxial with said horizontal axis through the housing, and the discharge opening is arranged in a wall of the housing so that at least part of said molten material can be removed from the housing via the discharge opening by tilting the furnace about said axis. Discharge through a discharge opening by means of tilting the housing can be controlled more precisely than in the prior art. However tilting of a conventional housing entails disadvantages because a conventionally placed supply opening in the housing undergoes a combined rotation and translation movement on tilting, in particular movement along a circle segment. As a result connecting a material supply is complex, namely this material supply - in order to be used continuously - must perform the same rotation and translation movement whenever the furnace tilts. Because the supply opening in the furnace according to the invention extends coaxial with the horizontal axis, on tilting this opening performs only a rotational movement and not a translation movement. A rotational movement without translation movement is simple to absorb mechanically. The furnace according to the invention therefore allows the connection of a material supply with the supply opening in a technically simple manner. As a result the furnace according to the invention allows a continuous material supply to be connected to the housing even when the furnace is in a tilted position, whereby the furnace can function continuously. For the function of the furnace it is preferred if no extra material is added to the housing in the tilted position.

In the furnace of the present invention the gas outlet extends substantially coaxial with said horizontal axis through the housing. As described above in relation to the supply opening, a gas outlet which extends coaxial with the horizontal axis through the housing undergoes only a rotational movement and not a translation movement when the furnace tilts. As a result it is technically simple to connect the gas discharge system with the gas outlet.

The horizontal axis moreover intersects a wall of the housing at two points, wherein said supply opening extends at the site of the first of the two points, and wherein said gas outlet extends at the site of the second of the two said points. In this way the supply opening and the gas outlet are separate from each other. As a result these two openings can be connected and used independently of each other. Furthermore the material supply can be constructed and connected on one side of the furnace, and the gas discharge system can be constructed and connected on the other side of the furnace. In particular when toxic and radioactive material is molten and gasified, the material supply and the gas discharge system have a complex structure. In such a case it can be advantageous to be able to construct these each on separate sides of the furnace.

According to the invention said housing is sealed hermetically. A hermetically sealable furnace allows toxic and radioactive material to be gasified and molten without contaminating the environment. In contrast to furnaces from the prior art, in the furnace according to the invention it is technically possible to seal hermetically a continuously connected material supply and a continuously connected gas discharge system. Namely on tilting the furnace the openings perform a rotational movement in relation to the material supply and gas discharge system. It is simple to seal hermetically two elements which rotate in relation to each other, in contrast to those which perform both a translation and a rotational movement in relation to each other. The discharge opening is preferably intended to be connected hermetically to a mould whereby material discharged cannot contaminate the environment. This can be achieved by providing a screening lock which extends from the mould and which can be connected hermetically to the housing at the site of the discharge opening. The discharge opening can be hermetically sealed in a non-discharge position by providing a stop which fits into this discharge opening or with a mobile closing door lined with a refractory material.

The heating means comprise a plasma torch. A plasma torch can reach very high temperatures. Typically temperatures around 5000 ºC are no problem, in certain cases temperatures of 15,000 ºC can be achieved. At such high temperatures organic materials are gasified and inorganic materials are transformed into a chemically inert, vitrified slag. This vitrified slag, in relation to the materials introduced, has a volume reduction between a factor of 3 to a factor of 100 depending on the percentage of inorganic material in the material introduced.

Preferably said horizontal axis extends eccentrically in the direction towards said discharge opening. As a result the distance between the discharge opening and the axis is smaller than if the axis runs through the centre of the furnace. This distance is a directly proportional factor in the size of the translation movement performed by the discharge opening when the housing is tilted through a predetermined angle. By reducing this distance by placing the axis eccentrically, the discharge opening performs a smaller translation movement on tilting of the housing. In particular when the discharge opening is hermetically connected with capture means, it is an advantage if the translation movement is smaller. Namely this movement must be performed by the part of the receiving means connected with the discharge opening. The greater the movement of the opening which must be hermetically sealed, the more difficult it is to seal. Therefore it is advantageous if the axis lies eccentrically in the direction of the discharge opening.

The invention will now be described in more detail with reference to an embodiment example shown in the drawing.

In the drawing:
- Figure 1: is a principle view of a furnace according to the invention;
- Figure 2: shows a side view of a furnace according to the invention in the untilted position, and
- Figure 3: shows a side view of a furnace according to the invention in a tilted position.

In the drawing the same or similar elements have the same reference numeral.

Harmful materials such as radioactive or chemical hazardous waste must be processed into a stable state before they can be discharged and permanently stored. It is known to process such materials by gasifying and melting them at very high temperatures. If the gasification of material takes place under the presence of oxygen, combustion mainly occurs. However if no oxygen is present, certain material can also be transferred into a gaseous phase. The molten material, due to the very high temperatures of for example up to 15,000 ºC, will assume the form of a vitrified slag or a mixture of metal and slag. The harmful chemicals and radioactive compounds are substantially enclosed in this vitrified slag. As a result the vitrified slag is a more favourable state for storing such harmful materials on a refuse site or storage area.

These very high temperatures can be reached in a furnace 1 suitable for this. On processing with harmful materials, in particular precautionary measures must be taken to prevent contamination of the environment. The supply of such harmful materials to the furnace 1 must therefore take place by a specifically adapted material supply 9. Such a material supply 9 has a complex structure to prevent contamination of the environment. Furthermore the gasses which escape from such a furnace 1 must be captured to undergo special treatment. For this a gas discharge system 8 is provided which is suitable for this. A material supply 9 and gas discharge system 8 which can be used with the furnace 1 according to the invention are known from the prior art.

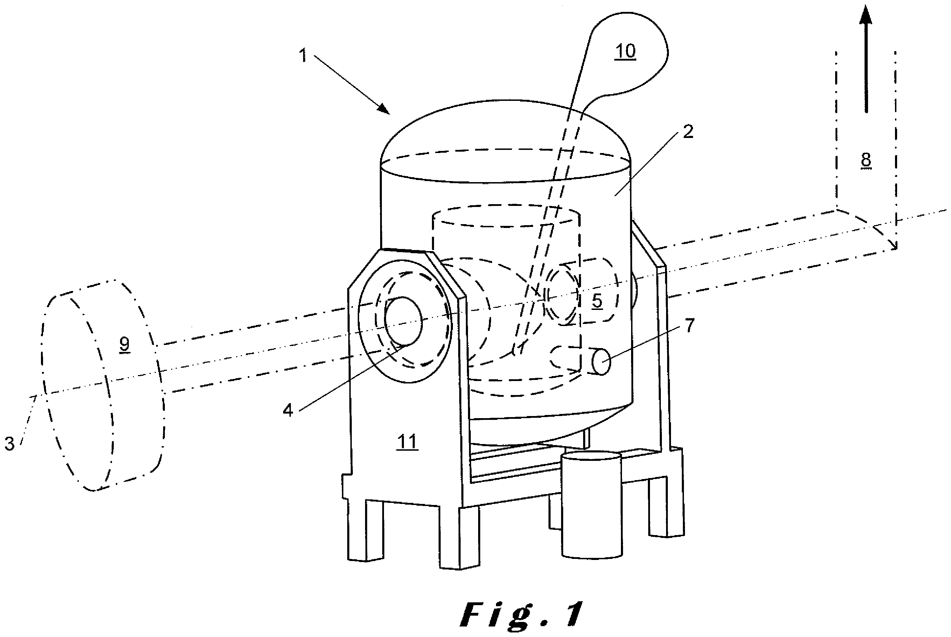

Figures 1 to 3 show a furnace 1 according to the invention wherein the furnace comprises a housing 2. The housing 2 is intended to enclose temporarily the material to be molten and gasified. For this the housing has a base part, a wall extending upwards from the floor part and preferably a lid to close the walls at the top. To be able to withstand the very high temperatures of the plasma torch, the housing is formed bowl-shaped. A bowl shape is a form whereby at least the bottom section of the bowl is formed as a segment of a bowl or a inverted cone with a truncated top, the opening of the bowl segment pointing upwards. A bowl-shaped housing allows material to collect and flow together in the bottom part of the housing. The plasma torch can then be directed to emit very local heat, being approximately in the centre above the material which collects in the bottom part of the bowl. Because of the bowl shape, the plasma torch can be located sufficiently far from the inner lining of the housing to emit heat but close enough to the material. In a housing with a flat or partly flat floor (flat in one direction), the molten and gasified material will always spread over this flat floor, whereby it is impossible to concentrate heat efficiently. A further effect of such a flat housing is that the distance between the location where the heat is applied and the inner lining is smaller (because the material is spread in the furnace) whereby damage occurs to the inner lining at very high temperatures. The housing, at least on an inside, is fitted with a refractory lining which is resistant to temperatures up to at least 1000 °C, preferably up to at least 1500 °C, more preferably around 2000 °C. The molten slag and the housing form a protection of the refractory lining against unshielded contact with the heating means. Therefore preferably after tilting the housing a specific quantity of molten material remains in the housing, which functions as thermal flywheel, resulting in protection and thereby a longer life of the lining. This is possible with discharge by tilting. The refractory lining can for example be made of graphite or silicon carbide or refractory materials with a high aluminium oxide or silicon carbide content. The housing 2 is fitted with a number of openings or similar for introduction of the material to be molten and gasified, to remove molten material and to remove gasified material, which openings will be explained in more detail below.

The housing 2 is mounted tilting around a substantially horizontal axis 3. The horizontal axis 3 is preferably located in relation to said housing 2 so that the axis extends successively through a zone outside the housing, then through a first zone in the wall of the housing 2, then through a cavity inside the housing, then through a second zone in the wall of the housing 2 and then through a zone outside the housing 2. The horizontal axis 3, viewed in the height direction of the housing 2, is preferably located at the height of a centre part of the housing.

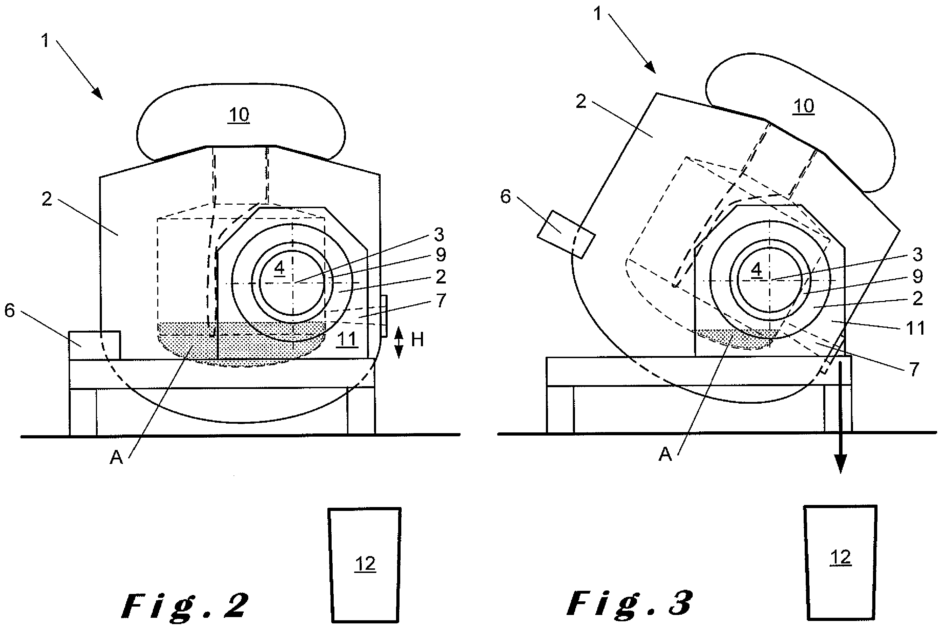

The housing 2 comprises a discharge opening 7 in its wall. Because this discharge opening is in the wall, it is easily accessible if the opening becomes blocked. This discharge opening 7 is positioned such that molten material in the housing 2, by means of tilting around said horizontal axis 3, can be removed from the housing 2 via the discharge opening 7. For this the discharge opening is preferably positioned in the housing 2 at an equal distance from said first and second zones in the wall of the housing 2. This means that said discharge opening 7 preferably lies in a plane which stands perpendicular to the horizontal axis and divides the housing 2 into two substantially equal parts. Furthermore the discharge opening 7 is preferably positioned, viewed in the height direction, substantially in the middle between the inner floor of the housing and the horizontal axis 3. Because of distance H, viewed in the height direction, from the discharge opening to the inner floor of the housing 2, when the housing is in the untilted position as shown in figure 2, the housing can contain a volume of material including liquid material. The size of this volume of material depends on the inner diameter of the housing and distance H from the inner floor to the discharge opening. In each case the liquid level can rise in the housing 2 until substantially the level of the discharge opening 7 is reached.

In a tilted position as shown in figure 3, the discharge opening 7 is lower than in an untilted position. Also in this tilted position the inner floor of the housing 2 is at least partly higher than in the untilted position. Thus the volume of liquid material which can be present in the housing up to the level below the discharge opening is significantly smaller than when the housing is in an untilted position. On the basis of this difference in volume which the housing can contain between an untilted and a tilted position, liquid material can be discharged through the discharge opening. Gravity helps here because it keeps the fluid level substantially horizontal.

The difference in volume and the discharge are illustrated in figures 2 and 3, whereby the arc indicated A shows the volume of fluid which the housing can contain. The tilting principle for discharging fluid is generally known and will not therefore be explained in more detail. One advantage of discharge by tilting is the high degree of control over the quantity discharged.

The housing 2 can be tilted by fitting the housing 2 with a handle part 6. This handle part 6 is preferably positioned on a wall of the housing 2 substantially opposite the discharge opening 7. By moving the handle part 6 up, for example with a hydraulic cylinder, the housing 2 is tilted.

Preferably the horizontal axis 3 is placed eccentrically in the direction of the discharge opening 7 as shown in figures 2 and 3. As a result the distance between the discharge opening 7 and the horizontal axis 3 is smaller than the distance between the discharge opening 7 and the centre of the housing. As this distance is a factor which determines the size of the translation movement of the discharge opening 7 on tilting the housing 2 through a specific angle, and the size of the translation is preferably small, it is an advantage to reduce this distance. So the discharge opening 7 undergoes a smaller translation movement on tilting of the housing 2. This has positive consequences for closing the discharge opening 7 as discussed below. The side of the housing which is opposite the discharge opening 7 undergoes a greater translation movement on tilting than if the horizontal axis 3 is positioned centrally. However this has no significant disadvantages.

The furnace 1 according to the invention furthermore comprises heating means 10 which are shown in principle in the figures. The heating means 10 extend preferably through the housing 2. More preferably the heating means 10 protrude through a lid of the housing 2. The heating means 10 according to the invention reach a temperature of more than 1000 ºC, preferably more than 2000 ºC, more preferably more than 5000 ºC, most preferably more than 10,000 ºC. The heating means according to the invention are formed by at least one plasma torch 10. Due to the extremely high temperatures which can be achieved with a plasma torch 10, a plasma torch is very suitable for gasifying and melting toxic and radioactive material. The heating means 10 are preferably intended to tilt at least partly on tilting of the furnace.

A supply opening 4 extends through the housing 2 from the outside of the housing 2 to the inside. The supply opening 4 is intended for material to be able to be introduced through this opening into the housing 2. The supply opening 4 extends coaxial with the horizontal axis 3. This means that the axis of the supply opening 4 substantially coincides with the tilt axis 3 of the housing 2. As a result on tilting of the housing 2, the supply opening 4 undergoes no translation movement, namely its axis coincides with the tilt axis 3. As a result the supply opening 4 can be permanently connected to a material supply 9 without this material supply 9 having to absorb a complex movement when the housing 2 tilts. This makes it possible to allow the furnace 1 according to the invention to work continuously.

The housing 2 is mounted tilting on a frame 11 by attaching the housing rotatably at the site of its supply opening and gas outlet. At the site of the supply opening 4 and the frame 11 the assembly is constructed such that a number of concentric circles can be perceived about the horizontal axis 3, wherein each circle indicates a part of the assembly. For the sake of clarity the concentric circle with the smallest diameter is indicated with the lowest number. The first circle is formed by the material supply 9 which is connected to the supply opening 4. The second circle is formed by the housing 2 or a protrusion thereof. Between the first circle and the second circle is a bearing (not shown) so that the material supply 9 which extends at least partly through the supply opening of the housing 2 can rotate in this opening. The third circle is formed by the frame 11. Between the third circle and the second circle is another bearing (not shown) whereby the housing 2 can rotate in relation to the frame 11. According to this structure the assembly from outside to inside comprises successively the frame 11, a first bearing (not shown), the housing 2, a second bearing (not shown), the material supply 9. Due to this structure the housing 2 can be tilted around the tilt axis 3 while both the frame 11 and the material supply 9 are stationary. In other words the second circle can rotate while the first and third circles are stationary. In view of the complexity of the material supply 9 for the reasons given above, it is an advantage to keep stationary the material supply 9 connected to the housing 2 on tilting of the housing 2.

A gas outlet opening 5 also extends through the housing 2 from the inside of the housing 2 to the outside. The gas outlet opening 5 extends, like the supply opening 4, coaxial with the centre axis 3. A gas discharge 8 is preferably connected to the gas outlet opening 5. Here the construction at the site of the gas outlet opening 5 is similar to the construction at the site of the supply opening 4 described in detail above. As a result, similarly to the supply opening 4, a gas discharge 8 can be connected to said gas outlet opening 5, whereby the gas discharge 8 can stand still while the housing 2 tilts. The gas outlet opening 5 undergoes only a rotational movement in relation to the gas discharge 8 when the housing 2 is tilted.

The supply opening 4 extends in the said first zone in the wall of the housing 2 while the gas outlet opening extends in said second zone in the wall of the housing 2. As a result the supply opening 4 and the gas outlet opening 5 are at different places in the housing 2, whereby the material supply 9 and gas discharge 8 can be connected and used independently of each other.

The housing 2 is sealed hermetically so that the material in the housing 2 cannot contaminate the environment. For this the connection between the floor part and wall of the housing is designed hermetically. Furthermore the connection between lid and wall, if a lid is present, is designed hermetically. If no lid is present, the heating means 10 are sealed hermetically at the top of the housing 2. Also all further openings in the housing are either sealed hermetically or are connected hermetically with further means such as the gas discharge 8 and material supply 9.

The supply opening 4 and gas outlet opening 5 are oermanently connected with the material supply 9 and the gas discharge 8 respectively in a hermetic manner. For this the bearings which allow the rotation of firstly the supply opening in relation to the material supply and secondly the gas outlet opening in relation to the gas discharge are sealing bearings. These sealing bearings have the function not only of facilitating rotation but also the function of preventing leaks of material out of the housing 2 towards the outside through the bearing. Such bearings with a sealing function are known to the skilled person.

The discharge opening 7 can be sealed hermetically in two ways which can be combined. A first way of hermetically sealing the discharge opening 7 is to place a stop in or on this opening 7 or at the site of the opening 7 against the housing 2. Closing the discharge opening 7 by means of the stop is preferred if the housing 2 is in the untilted position because the stop can absorb an air pressure difference between the outside and inside of the housing 2. However if the housing 2 is in the tilted position with the aim of discharging liquid material through the discharge opening 7, the stop will prevent this discharge.

A second way of sealing the discharge opening 7 hermetically is to connect this discharge opening hermetically with a mould 12 in which the liquid material can be absorbed after being discharged. To achieve this for example a screening lock (not shown) can extend from said mould 12 to said discharge opening 7. This screening lock can form a whole with the mould 12 such that no leaks can occur between the screening lock and the mould 12. Furthermore the screening lock can be designed to connect hermetically to an outside of the housing 2 around the discharge opening 7 in order to connect the discharge opening 7 hermetically to the mould 12. For this the housing 2 on the outside can have a flat part which extends around the discharge opening 7. A protection lock can simply be attached hermetically to this flat part. This second manner allows material to be discharged into a mould and would therefore be preferred namely in the tilted position of the housing 2.

Preferably both the stop and the screening lock are used simultaneously to close the discharge opening from the environment. On tilting the stop must be removed. This can be achieved by providing a stop handling mechanism in the screening lock.

With the furnace 1 according to the invention, a closed assembly is obtained which can prevent the spread of toxic and radioactive gasses, dust, fly ash and slag to the environment. The gasses, fly ash and slag produced can be removed in a controlled manner. Partly by the absence of many internal moving parts in the housing 2, maintenance in toxic and radioactive circumstances is very limited.

## Claims

1. A furnace (1) for melting inorganic and gasifying organic toxic and radioactive material comprising:
- a frame (11);
- a bowl-shaped housing (2) for temporary enclosure of said material, which can be tilted around a substantially horizontal axis (3) which intersects the housing at two points;
- a supply opening (4) through said housing (2) that can be connected with a material supply (9) for introduction of said material into said housing (2), said supply opening (4) extending substantially coaxial with said horizontal axis (3) through the housing (2) at the site of the first of said two points;
- a discharge opening (7) through said housing (2) for removal of molten material from said housing (2), the discharge opening (7) being arranged in a wall of the housing (2) so that at least part of said molten material can be removed from the housing (2) via the discharge opening (7) by tilting the furnace (1) around said axis (3);
- a gas outlet (5) through said housing (2) that can be connected with a gas discharge (8) for removal of gasified material from said housing (2), said gas outlet (5) extending substantially coaxial with said horizontal axis (3) through the housing (2) at the site of the second of said two points; wherein the furnace (1) further comprises:
- a plasma torch (10) provided to melt and gasify the material introduced;
- a first bearing disposed between the frame (11) and the housing (2) around each of said two points to mount the housing (2) on the frame (11);
- a second sealing bearing disposed within the supply opening (4) configured to receive a part of said material supply (9) to connect the supply opening (4) hermetically to the material supply (9); and
- a third sealing bearing disposed within the gas outlet (5) configured to receive a part of said gas discharge (8) to connect the gas outlet (5) hermetically to the gas discharge (8).

2. Furnace (1) according to claim 1, wherein said discharge opening is mounted at a distance from said supply opening (4) and at a distance from said outlet (5).

3. Furnace (1) according to any of the preceding claims, wherein said housing (2) is sealed hermetically.

4. Furnace (1) according to any of the preceding claims, wherein said discharge opening (7) can be connected hermetically with a mould (12) to receive at least part of said melted material.

5. Furnace (1) according to any of the preceding claims, wherein said horizontal axis (3) extends eccentrically in the direction of said discharge opening (7).

## Patentansprüche

1. Ofen (1) zum Schmelzen anorganischen und Vergasen organischen toxischen und radioaktiven Materials, umfassend:
- einen Rahmen (11);
- ein schalenförmiges Gehäuse (2) für das zeitweilige Einschließen des Materials, das um eine im Wesentlichen horizontale Achse (3), die das Gehäuse an zwei Stellen schneidet, gekippt werden kann;
- eine Zufuhröffnung (4) durch das Gehäuse (2), die mit einer Materialzufuhr (9) zum Einführen des Materials in das Gehäuse (2) verbunden werden kann, wobei sich die Zufuhröffnung (4) im Wesentlichen koaxial zu der horizontalen Achse (3) durch das Gehäuse (2) an dem Ort des ersten der zwei Stellen erstreckt;
- eine Entladeöffnung (7) durch das Gehäuse (2) zum Entfernen geschmolzenen Materials aus dem Gehäuse (2), wobei die Entladeöffnung (7) in einer Wand des Gehäuses (2) derart eingerichtet ist, dass mindestens ein Teil des geschmolzenen Materials aus dem Gehäuse (2) über die Entladeöffnung (7) durch Kippen des Ofens (1) um seine Achse (3) entfernt werden kann;
- einen Gasauslass (5) durch das Gehäuse (2), der mit einer Gasentladung (8) zum Entfernen vergasten Materials aus dem Gehäuse (2) verbunden werden kann, wobei sich der Gasauslass (5) im Wesentlichen koaxial zu der horizontalen Achse (3) durch das Gehäuse (2) an dem Ort der zweiten der zwei Stellen erstreckt;
wobei der Ofen (1) weiter umfasst:
- einen Plasmabrenner (10), der bereitgestellt ist, um das eingeführte Material zu schmelzen und zu vergasen;
- ein erstes Lager, das zwischen dem Rahmen (11) und dem Gehäuse (2) um jede der zwei Stellen angeordnet ist, um das Gehäuse (2) auf den Rahmen (11) zu montieren;
- ein zweites abdichtendes Lager, das innerhalb der Zufuhröffnung (4) angeordnet ist, das dazu konfiguriert ist, einen Teil der Materialzufuhr (9) aufzunehmen, um die Zufuhröffnung (4) hermetisch mit der Materialzufuhr (9) zu verbinden; und
- ein drittes abdichtendes Lager, das innerhalb des Gasauslasses (5) angeordnet ist, das dazu konfiguriert ist, einen Teil der Gasentladung (8) aufzunehmen, um den Gasauslass (5) hermetisch mit der Gasentladung (8) zu verbinden.

2. Ofen (1) nach Anspruch 1, wobei die Entladeöffnung in einem Abstand von der Zufuhröffnung (4) und in einem Abstand von dem Auslass (5) montiert ist.

3. Ofen (1) nach einem der vorstehenden Ansprüche, wobei das Gehäuse (2) hermetisch abgedichtet ist.

4. Ofen (1) nach einem der vorstehenden Ansprüche, wobei die Entladeöffnung (7) hermetisch mit einer Form (12) verbunden werden kann, um mindestens einen Teil des geschmolzenen Materials aufzunehmen.

5. Ofen (1) nach einem der vorstehenden Ansprüche, wobei sich die horizontale Achse (3) exzentrisch in die Richtung der Entladeöffnung (7) erstreckt.

## Revendications

1. Four (1) pour faire fondre un matériau toxique et radioactif inorganique et pour gazéifier un matériau toxique et radioactif organique, comprenant
- un cadre (11) ;
- un logement en forme de bol (2) pour le renfermement provisoire dudit matériau, qui peut être incliné autour d'un axe sensiblement horizontal (3) qui coupe le logement en deux points ;
- une ouverture d'alimentation (4) à travers ledit logement (2) qui peut être reliée à une alimentation en matériau (9) pour l'introduction dudit matériau dans ledit logement (2), ladite ouverture d'alimentation (4) s'étendant sensiblement coaxialement avec ledit axe horizontal (3) à travers l'ouverture (2) à l'emplacement du premier desdits deux points ;
- une ouverture de décharge (7) à travers ledit logement (2) pour le retrait du matériau fondu dudit logement (2), l'ouverture de décharge (7) étant agencée dans une paroi du logement (2) de sorte qu'au moins une partie dudit matériau fondu puisse être retirée du logement (2) par l'intermédiaire de l'ouverture de décharge (7) en inclinant le four (1) autour dudit axe (3) ;
- une sortie de gaz (5) à travers ledit logement (2) qui peut être reliée à une décharge de gaz (8) pour le retrait du matériau gazéifié depuis ledit logement (2), ladite sortie de gaz (5) s'étendant sensiblement coaxialement avec ledit axe horizontal (3) à travers le logement (2) à l'emplacement du second desdits deux points ;
dans lequel le four (1) comprend en outre :
- un chalumeau à plasma (10) prévu pour faire fondre et gazéifier le matériau introduit ;
- un premier palier disposé entre le cadre (11) et le logement (2) autour de chacun desdits deux points pour monter le logement (2) sur le cadre (11) ;
- un deuxième palier de scellement disposé à l'intérieur de l'ouverture d'alimentation (4) configuré pour recevoir une partie de ladite alimentation en matériau (9) pour relier l'ouverture d'alimentation (4) hermétiquement à l'alimentation en matériau (9) ; et
- un troisième palier de scellement disposé à l'intérieur de la sortie de gaz (5) configuré pour recevoir une partie de ladite décharge de gaz (8) pour relier la sortie de gaz (5) hermétiquement à la décharge de gaz (8).

2. Four (1) selon la revendication 1, dans lequel ladite ouverture de décharge est montée à distance de ladite ouverture d'alimentation (4) et à distance de ladite sortie (5).

3. Four (1) selon l'une quelconque des revendications précédentes, dans lequel ledit logement (2) est scellé hermétiquement.

4. Four (1) selon l'une quelconque des revendications précédentes, dans lequel ladite ouverture de décharge (7) peut être reliée hermétiquement à un moule (12) pour recevoir au moins une partie dudit matériau fondu.

5. Four (1) selon l'une quelconque des revendications précédentes, dans lequel ledit axe horizontal (3) s'étend excentriquement dans le sens de ladite ouverture de décharge (7).
